# EUROPÄISCHE PATENTSCHRIFT

(11) **EP 2 958 744 B1**
(45) Veröffentlichungstag und Bekanntmachung des Hinweises auf die Patenterteilung: **25.10.2017**
(21) Anmeldenummer: 14704821.9
(22) Anmeldetag: 18.02.2014
(51) Int. Cl.: B31F 1/28, B41J 3/407, B65H 26/02, G01N 21/89

(54) **ANLAGE UND VERFAHREN ZUR BEARBEITUNG EINER PAPIERBAHN ODER WELLPAPPEBAHN**
SYSTEM AND METHOD FOR PROCESSING A PAPER WEB OR CORRUGATED CARDBOARD WEB
INSTALLATION ET PROCÉDÉ DE TRAITEMENT D'UNE BANDE DE PAPIER OU D'UNE BANDE DE CARTON ONDULÉ

(30) Priorität: 21.02.2013 DE 102013202871
(43) Veröffentlichungstag der Anmeldung: 30.12.2015
(73) Patentinhaber: BHS Corrugated Maschinen- und Anlagenbau GmbH, 92729 Weiherhammer (DE)
(72) Erfinder: MARK, Maximilian, 95666 Mitterteich (DE); HELGERT, Achim, 92697 Georgenberg (DE)
(74) Vertreter: Rau, Schneck & Hübner Patentanwälte Rechtsanwälte PartGmbB
(86) Internationale Anmeldenummer: PCT/EP2014/053108
(87) Internationale Veröffentlichungsnummer: WO 2014/128115

(56) Entgegenhaltungen:
- DE-A1- 10 161 502
- GB-A- 1 291 207
- US-A1- 2005 085 362
- US-A1- 2006 148 631

## Beschreibung

Die Erfindung richtet sich auf eine Anlage zur Bearbeitung einer Papierbahn oder Wellpappebahn gemäß dem Oberbegriff des Anspruchs 1. Außerdem betrifft die Erfindung ein Verfahren zur Erfassung erhabener Materialfehler an einer entlang einer Transportrichtung bewegten Papierbahn oder Wellpappebahn.

Aus der US 2005/085362 A1 ist eine gattungsgemäße Anlage zur Bearbeitung einer Wellpappebahn bekannt. Die US 2006/148631 A1 offenbart eine weitere Anlage zur Bearbeitung einer Wellpappebahn. Die DE 101 61 502 A1 und GB 1 291 207 A offenbaren Materialfehler-ErfassungsVorrichtungen.

Unter erhabenen Materialfehlern werden hier unter anderem Materialfehler verstanden, die von der eigentlichen Materialfläche nach außen vorstehen, wie Klebefehlstellen, Falten/Knicke, Randeinrisse bzw. Bahnlöcher mit hochstehenden Bereichen bzw. Rändern. Wesentliches Kriterium ist dabei die Erhabenheit des Materialfehlers.

Aus dem Stand der Technik ist eine Vielzahl verschiedenster Vorrichtungen zur Erfassung erhabener Materialfehler an bewegten Materialbahnen bekannt. Hierzu werden oftmals Profil-Sensoreinrichtungen verwendet, die oberhalb oder unterhalb der zu überwachenden Materialbahn angeordnet sind und diese somit von oben bzw. unten überwachen. Solche Profil-Sensoreinrichtungen sind durch ihre nötige Kaskadierung über die Breite äußerst komplex und kostenintensiv. Gleiches gilt für visuelle Überwachungssysteme.

Des Weiteren werden insbesondere im Schmalbahnbereich einfache Lichtschranken eingesetzt. Eine Bestimmung der Fehlerposition ist bei diesen Systemen jedoch nicht möglich. Zudem ist hierbei oftmals eine mechanische Justierung an verschiedene Materialbahn-Dicken notwendig.

Ferner gibt es bei diesen bekannten Lösungen oftmals Fehlauslösungen. Derartige Materialfehler können zu hohen Schäden bei der nachfolgenden Bearbeitung der Materialbahn führen. Die Schäden können an Bearbeitungs-Vorrichtungen, an der Materialbahn selbst oder an der Umgebung auftreten. Die Materialfehler verursachen oftmals insbesondere bei Digital-Druck-Einrichtungen, wie bei Tintenstrahl-Digital-Druck-Einrichtungen, Schäden, da diese im Allgemeinen empfindliche Feinkeramik-Bauteile umfassen.

Der Erfindung liegt daher die Aufgabe zugrunde, eine Anlage zu schaffen, bei der eine Beschädigung der Druck-Einrichtung durch Materialfehler einfach und funktionssicher verhinderbar ist. Ferner sollen Fehlauslösungen nicht auftreten. Ein entsprechendes Verfahren zur Erfassung erhabener Materialfehler an einer bewegten Materialbahn soll ebenfalls geschaffen werden.

Diese Aufgabe wird erfindungsgemäß durch die in den unabhängigen Ansprüchen 1 und 14 angegebenen Merkmale gelöst. Der Kern der Erfindung liegt darin, dass mindestens zwei Sensoreinheiten Sensorstrahlen erzeugen, die zur Erfassung eines Materialfehlers über die zu überwachende/n Materialflächenseite/n der Materialbahn verlaufen und einen sich über ihre Signalstrecke in der Transportrichtung verändernden Abstand zueinander haben. Die ersten und zweiten Sensorstrahlen verlaufen also nicht parallel zueinander. Es erfolgt eine seitliche Überwachung der Materialbahn. Die Materialbahn ist durch die Papierbahn bzw. Wellpappebahn gebildet.

In Abhängigkeit der Position des Materialfehlers zu den Längsrändern der Materialbahn braucht der Materialfehler zum Durchsetzen der ersten und zweiten Sensorstrahlen eine unterschiedliche Zeit. Wenn sich beispielsweise der Materialfehler an einer Stelle an der Materialbahn befindet, bei der der Abstand der ersten und zweiten Sensorstrahlen in Bezug auf die Transportrichtung kleiner ist, als an einer anderen Stelle, so benötigt er dort eine geringere Zeit. Die Transportgeschwindigkeit der Materialbahn ist in Transportrichtung naturgemäß über deren Breite konstant. Die Position des Materialfehlers ist so einfach über die Zeit zum Durchlauf der ersten und zweiten Sensorstrahlen, die Transportgeschwindigkeit und die geometrische Anordnung der Sensorstrahlen zueinander bestimmbar bzw. berechenbar.

Umgekehrt gilt dies analog. Wenn sich also beispielsweise der Materialfehler an einer Stelle an der Materialbahn befindet, bei der der Abstand der ersten und zweiten Sensorstrahlen in Bezug auf die Transportrichtung größer ist, als an einer anderen Stelle, so benötigt er dort eine längere Zeit.

Es ist von Vorteil, wenn die Sender Sensorstrahlen in Impulsen aussenden.

Günstigerweise verändern die Sensoreinheiten ihre Stellung im Betrieb nicht. Die Ausrichtung der ersten und zweiten Sensorstrahlen zueinander bleibt also im Betrieb vorteilhafterweise gleich.

Es ist von Vorteil, wenn die Sender und/oder die zugeordneten Empfänger in ihrem Abstand zueinander verstellbar sind. Hierdurch sind diese einfach an unterschiedliche Materialbahn-Breiten anpassbar. Bevorzugt ist jedoch eine fixe Anordnung der Sensoreinheiten gemäß der maximalen Materialbahn-Breite.

Günstigerweise sind die Sender und/oder die zugeordneten Empfänger senkrecht zu der Oberseite bzw. Unterseite der Materialbahn im Bereich der jeweiligen Sensoreinheit verstellbar. Hierdurch ist eine Einstellung der Sensoreinheiten beispielsweise an die Dicke der Materialbahn möglich. Entsprechende Lagerungen sind dafür, vorzugsweise an Gestellteilen, vorgesehen.

Die Sensoreinheiten können beispielsweise optische Sensoreinheiten, Ultraschall-Sensoreinheiten, Schallwellen-Sensoreinheiten oder dergleichen sein.

Es ist von Vorteil, wenn die Sensoreinheiten an einem gemeinsamen Gestell befestigt sind.

Es ist zweckmäßig, wenn die Signal-Auswertungseinheit mindestens eine Regeleinrichtung umfasst.

Es ist von Vorteil, wenn bei einem detektierten Materialfehler ein optischer und/oder akustischer Hinweis erfolgt. Vorzugsweise erfolgt alternativ oder zusätzlich automatisch ein Herausschneiden des den Materialfehler aufweisenden Bereichs der Materialbahn. Alternativ oder zusätzlich erfolgt eine entsprechende Verstellung nachfolgender Bearbeitungs-Einrichtungen zum Vermeiden einer Kollision mit dem erhabenen Materialfehler. Durch Nachverfolgung der Materialbahnabweichung in der Transportrichtung sind die oben genannten Ausgleichsmechanismen zeitlich mit dem Passieren des Materialbahnfehlers synchronisierbar. Die Makulatur reduziert sich daher auf ein Minimum.

Die Signalverbindung zwischen der Sensoreinrichtung und der Signal-Auswertungseinheit kann drahtgebunden oder drahtlos sein. Durch die Signalverbindung sind Signale zwischen der Sensoreinrichtung und der Signal-Auswertungseinheit übertragbar, die korrespondierend zu den Materialfehlern sind.

Die Materialbahn ist vorzugsweise eine Endlos-Materialbahn.

Es ist eine Materialflächenseite überwachbar. Dies kann eine obere oder untere Seite sein. Alternativ sind beide Materialflächenseiten überwachbar.

Es ist zweckmäßig, wenn die Signal-Auswertungseinheit im Stande ist, die Papierbahn oder Wellpappebahn zumindest im Bereich der Druck-Einrichtung und/oder die Druck-Einrichtung derart zu verstellen, dass eine Kollision zwischen dem erfassten Materialfehler und der Druck-Einrichtung unterbleibt. Beispielsweise wird dafür der Druckkopf bzw. werden die Druckköpfe der Druck-Einrichtung von der Materialbahn abgehoben bzw. weiter entfernt. Alternativ bzw. zusätzlich wird der Verlauf der Materialbahn derart verändert, dass der Abstand zwischen dem Druckkopf bzw. den Druckköpfen und der Materialbahn vergrößert wird. Alternativ bzw. zusätzlich wird der Druckkopf bzw. werden die Druckköpfe durch eine Schutz-Einrichtung, wie einen Verschluss, vor dem Materialfehler geschützt. Die Schutz-Einrichtung wird dafür vorzugsweise entsprechend betätigt. Das Risiko einer Beschädigung sensibler Bauteile bzw. Komponenten ist so verhinderbar.

Insbesondere erfolgt eine Verstellung des mindestens einen Druckkopfs, wenn sich der Druckkopf in dem Bahnbereich des Materialfehlers befindet und dieser Druckkopf einen bezogen auf die Höhe des Materialfehlers kritischen Abstand zu der Materialbahn hat. Diese Information liegt der Signal-Auswertungseinheit vor, die vorzugsweise sensorisch, aber auch durch manuelle Bedienung gewinnbar ist. Für diese Koordination ist es von Vorteil, wenn die Trägheit der Betätigungs-Einrichtung und/oder die Anlagen-Geschwindigkeit berücksichtigt wird.

Die erste Vorrats-Einrichtung ist vorzugsweise als Vorratsrollen-Einrichtung ausgeführt. Andere Ausgestaltungen sind alternativ möglich.

Die Druck-Einrichtung ist günstigerweise als Digital-Druck-Einrichtung ausgebildet. Andere Druck-Einrichtungen sind alternativ einsetzbar.

Weitere vorteilhafte Ausgestaltungen sind in den Unteransprüchen angegeben.

Die Signal-Auswertungseinheit nach Anspruch 2 ist so auch fähig zu bestimmen, ob der Materialfehler bezüglich seiner Lage bzw. Erstreckung problematisch ist. Wenn sich beispielsweise der Materialfehler in einem seitlichen Randstreifen der Materialbahn befindet, so ist dieser im Allgemeinen nicht relevant, da dieser Randstreifen oftmals später abgeschnitten wird. Es ist von Vorteil, wenn die Signal-Auswertungseinheit dann keine Fehlermeldung ausgibt. Die Definition von Toleranzbereichen erfolgt dabei vorzugsweise auftragsabhängig.

Gemäß Anspruch 3 verlaufen die ersten und/oder zweiten Sensorstrahlen schräg zu der Transportrichtung. Wenn nur die ersten oder zweiten Sensorstrahlen schräg zu der Transportrichtung verlaufen, so erstrecken sich die anderen Sensorstrahlen senkrecht zu der Transportrichtung.

Durch die Anordnung der Sensoreinheiten gemäß Anspruch 4 ist eine äußerst genaue Lokalisierung des Materialfehlers möglich. Das Verhältnis der Senderabstände und Empfängerabstände zueinander ist vorzugsweise in Abhängigkeit der Materialbahn-Breite gewählt.

Es ist von Vorteil, wenn der erste Sender und der erste Empfänger und/oder der zweite Sender und der zweite Empfänger seitlich neben der Materialbahn angeordnet sind. Diese Ausgestaltung ist aus praktischen Gründen äußerst vorteilhaft. Die Materialbahn ist so über ihre Gesamtbreite überwachbar.

Die Ausgestaltung nach Anspruch 5 führt wieder zu einer äußerst genauen Fehlerlokalisierung. Die Winkel liegen vorzugsweise jeweils zwischen 5° und 55°, bevorzugter zwischen 15° und 50°, bevorzugter zwischen 20° und 45°. Die Winkel können identisch oder verschieden zueinander sein. Alternativ schließen die ersten und zweiten Sensorstrahlen bezogen auf eine zu der Transportrichtung senkrecht verlaufende Querrichtung im Betrag einen identischen Winkel ein.

Der Sensorstrahlen-Vorhang nach Anspruch 6 erstreckt sich vorzugsweise senkrecht zu der/n zu überwachenden Materialflächenseite/n der Materialbahn. Die ersten und/oder zweiten Empfänger sind entsprechend zur Detektierung der unterschiedliche, senkrechte Abstände zu der zu überwachenden Materialflächenseite aufweisenden Sensorstrahlen ausgebildet. Wenn beispielsweise nur der am nächsten zu der Materialbahn verlaufende Sensorstrahl von einem erhabenen Materialfehler unterbrochen wird, so ist dadurch die Höhe des Materialfehlers einfach bestimmbar. Sie ist kleiner als der senkrechte Abstand des nächsten Sensorstrahls des Sensorstrahlen-Vorhangs zu der Materialbahn. Analoges gilt für die anderen Sensorstrahlen in dem Sensorstrahlen-Vorhang. Vorteilhaft ist die Verwendung von "Mehrfachlichtschranken", die beispielsweise durch CCD(Charged coupled device)-Empfängertechnik im Stande sind, mehrere übereinander angeordnete Sensorstrahlen voneinander getrennt zu detektieren. Dadurch ist eine einfache Veränderung der zu tolerierenden Materialbahn-Erhabenheit sowie eine Referenzierung auf verschiedene Materialbahn-Dicken möglich.

Die Ausgestaltung nach Anspruch 7 ermöglicht eine einfache und kostengünstige beidseitige Überwachung der Materialbahn.

Bei der Ausgestaltung nach Anspruch 8 treffen auch Sensorstrahlen seitlich auf die Materialbahn, sodass deren Dicke bestimmbar ist.

Vorzugsweise ist/sind die erste und/oder zweite Sensoreinheit als optische Sensoreinheit ausgebildet, wobei die ersten und/oder zweiten Sensorstrahlen Licht-Sensorstrahlen sind. Diese Ausgestaltung ergibt eine besonders funktionssichere Sensoreinrichtung. Elektrische Impulse werden vorteilhafterweise von dem jeweiligen Sender der optischen Sensoreinheit in Lichtimpulse umgewandelt und von dem zugeordneten Empfänger der optischen Sensoreinheit wieder in elektrische Signale gewandelt. Die elektrischen Signale sind von der Signal-Auswertungseinheit einfach auswertbar.

Eine Umrechnung der Zeitsignale in Differenzstrecken zwischen den ersten und zweiten Sensorstrahlen gemäß Anspruch 9 ermöglicht zusätzlich eine Positionsberechnung des Materialfehlers während einer Beschleunigung oder Verzögerung der Materialbahn. Diese Umrechnung mittels Integration der zurückgelegten Strecke des Materialfehlers über der zeitlichen Differenz der beiden Sensorstrahleneinlaufzeiten erlaubt zudem eine Entkopplung der Fehlerlänge in Transportrichtung von der Materialbahn-Geschwindigkeit. Diese führt bei gewünschter Festlegung einer minimalen Fehlerlänge in Transportrichtung zu einer weiteren Eliminierung von Fehlauslösungen.

Die Ausgestaltungen gemäß den Ansprüchen 10 bis 12 führen zu einer Anlage, die äußerst funktionssicher ist. Insbesondere sind Schäden an derselben durch kritische bzw. gefährliche Materialfehler verhinderbar. Unter "kritischen" bzw. "gefährlichen" Materialfehlern werden insbesondere solche Materialfehler verstanden, die aufgrund Lage, Größe und/oder Höhe im Stande sind, die Druck-Einrichtung bzw. deren mindestens einen Druckkopf zu beschädigen. Es erfolgt gegebenenfalls eine Verstellung der Papierbahn oder Wellpappebahn oder der Druck-Einrichtung.

In der Verbindungs-Einrichtung nach Anspruch 13 erfolgt vorzugsweise eine Verleimung oder Verschweißung der Materialbahnen miteinander. Die Riffel-Einrichtung ist vorzugsweise als Riffel-Walze ausgeführt. Weitere Vorrats-Einrichtungen sind einsetzbar.

Nachfolgend wird ein bevorzugtes Ausführungsbeispiel der Erfindung unter Bezugnahme auf die beigefügte Zeichnung beispielhaft erläutert. Dabei zeigen:
- Fig. 1: eine vereinfachte prinzipielle Draufsicht auf eine erfindungsgemäße Vorrichtung zur Erfassung erhabener Materialfehler und auf eine zu überwachende Materialbahn,
- Fig. 2: einen Schnitt durch die in Fig. 1 gezeigte Vorrichtung und die Materialbahn,
- Fig. 3: eine vereinfachte Anlage zur Bearbeitung einer Materialbahn, die im Wesentlichen die in den Fig. 1, 2 gezeigte Vorrichtung zur Erfassung erhabener Materialfehler umfasst,
- Fig. 4: eine detaillierte Darstellung der im Wesentlichen in Fig. 3 dargestellten Vorrichtung zur Erfassung erhabener Materialfehler,
- Fig. 5: einen ersten Teil einer Wellpappe-Anlage, die die in den Fig. 1 bis 4 dargestellte Vorrichtung zur Erfassung erhabener Materialfehler an einer Materialbahn umfasst,
- Fig. 6: eine vergrößerte Seitenansicht der Materialbahn, und
- Fig. 7: einen zweiten Teil der in Fig. 5 dargestellten Wellpappe-Anlage.

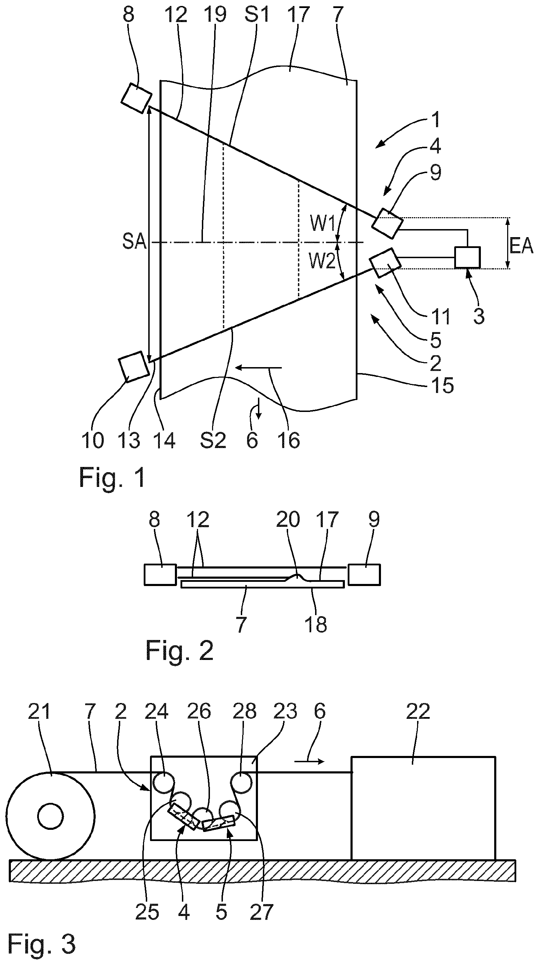

Bezug nehmend auf die Fig. 1, 2 wird zunächst eine vereinfachte Materialfehler-Erfassungs-Vorrichtung 1 beschrieben. Die Materialfehler-Erfassungs-Vorrichtung 1 umfasst eine Sensoreinrichtung 2 und eine Signal-Auswertungseinheit 3, die mit der Sensoreinrichtung 2 in Signalverbindung steht. Die Sensoreinrichtung 2 wiederum hat eine erste Sensoreinheit 4 und eine zweite Sensoreinheit 5, die vorzugsweise identisch zu der ersten Sensoreinheit 4 ausgeführt ist. Die zweite Sensoreinheit 5 ist in Transportrichtung 6 einer zu überwachenden Materialbahn 7 stromabwärts zu der ersten Sensoreinheit 4 angeordnet. Die Sensoreinheiten 4, 5 sind benachbart zu der Materialbahn 7 angeordnet. Genauer betrachtet, sind sie jeweils seitlich neben der Materialbahn 7 angeordnet.

Die erste Sensoreinheit 4 hat einen ersten Sender 8 und einen diesem zugeordneten ersten Empfänger 9. Die zweite Sensoreinheit 5 hat dagegen einen zweiten Sender 10 und einen diesem zugeordneten zweiten Empfänger 11. Der erste Sender 8 sendet erste Licht-Sensorstrahlen 12 aus, die von dem ersten Empfänger 9 empfangen werden, wenn die Verbindung zwischen diesen nicht unterbrochen ist. Der zweite Sender 10 sendet zweite Licht-Sensorstrahlen 13 aus, die von dem zweiten Empfänger 11 empfangen werden, wenn die Verbindung zwischen diesen nicht unterbrochen ist.

Die Materialbahn 7 hat einen ersten Längsrand 14 und einen zweiten Längsrand 15, der parallel zu dem ersten Längsrand 14 verläuft. Die beiden Längsränder 14, 15 erstrecken sich in der Transportrichtung 6 der Materialbahn 7. Ferner hat die Materialbahn 7 eine Querrichtung 16, die senkrecht zu der Transportrichtung 6 bzw. zu den Längsrändern 14, 15 verläuft. Die Querrichtung 16 erstreckt sich also über die Breite der Materialbahn 7. Die Materialbahn 7 hat außerdem eine Oberseite 17 und eine der Oberseite 17 gegenüber liegende Unterseite 18. Die Materialbahn 7 ist hier als Papierbahn oder Wellpappebahn ausgeführt. Sie liegt hier im Wesentlichen im Bereich der gesamten Sensoreinrichtung 2 in einer Ebene. Die Materialbahn 7 wird über eine Transporteinrichtung (nicht in den Fig. 1, 2 dargestellt) in der Transportrichtung 6 kontinuierlich mit einer Transportgeschwindigkeit transportiert, die im Allgemeinen ungleichmäßig ist, aber auch gleichmäßig sein kann.

Die Sender 8, 10 sind hier seitlich neben der Materialbahn 7 benachbart zu dem ersten Längsrand 14 angeordnet, während die Empfänger 9, 11 seitlich neben der Materialbahn 7 benachbart zu dem zweiten Längsrand 15 platziert sind. Die Materialbahn 7 liegt bei der ersten Sensoreinheit 4 in einer ersten Ebene. Dagegen liegt die Materialbahn 7 bei der zweiten Sensoreinheit 5 in einer zweiten Ebene. Die erste Ebene und die zweite Ebene können in einer gemeinsamen Ebene liegen; sie können aber auch schräg oder versetzt zueinander verlaufen. In Fig. 1 liegen die erste und zweite Ebene in einer gemeinsamen Ebene.

Der erste Sender 8 ist stromaufwärts zu dem zweiten Sender 10 angeordnet. Zwischen diesen liegt in Bezug auf die Transportrichtung 6 ein Senderabstand SA vor. Der erste Empfänger 9 ist stromaufwärts zu dem zweiten Empfänger 11 angeordnet. In der Transportrichtung 6 liegt zwischen diesen ein Empfängerabstand EA vor. Der Senderabstand SA ist hier in Bezug auf die Transportrichtung 6 größer, vorzugsweise mindestens 1,1 Mal so groß, wie der Empfängerabstand EA.

Für schmale Bahnen (kleiner 1000 mm Breite) ist der Senderabstand SA in Bezug auf die Transportrichtung 6 wesentlich größer, vorzugsweise mindestens doppelt so groß, bevorzugter mindestens dreimal so groß, wie der Empfängerabstand EA. Bei breiteren Bahnen (größer 1000 mm Breite) ist der Senderabstand SA in Bezug auf die Transportrichtung 6 zwischen 1,1 und 1,9 Mal, bevorzugter zwischen 1,2 und 1,8 Mal, größer als der Empfängerabstand EA.

Gemäß einer alternativen Ausführungsform ist in der Transportrichtung 6 der Empfängerabstand EA größer, bevorzugter mindestens 1,1 Mal so groß, wie der Senderabstand SA. Die obigen Ausführungen zu den Abständen gelten hier analog in umgekehrter Weise.

Dabei ist das Verhältnis zwischen Senderabstand SA und Empfängerabstand EA vorzugsweise zusätzlich unter Berücksichtigung des verfügbaren Einbauraums, der maximalen Transportgeschwindigkeit der Materialbahn und/oder der gewünschten Auflösung bzw. Genauigkeit der Fehlerlokalisierung gewählt.

Die Licht-Sensorstrahlen 12, 13 verlaufen jeweils schräg zu der Transportrichtung 6 bzw. der Querrichtung 16. Die ersten Licht-Sensorstrahlen 12 schließen mit einer Senkrechten 19 zu den Längsrändern 14, 15 einen ersten Winkel W1 ein, während die zweiten Licht-Sensorstrahlen 13 zu der Senkrechten 19 einen zweiten Winkel W2 einschließen. Die Winkel W1, W2 liegen vorzugsweise jeweils zwischen 5° und 55°, bevorzugter zwischen 15° und 50°, noch bevorzugter zwischen 20° und 45°. Die Winkel W1, W2 können identisch oder verschieden zueinander sein.

Die ersten Licht-Sensorstrahlen 12 legen zwischen dem ersten Sender 8 und dem ersten Empfänger 9 eine erste Signalstrecke S1 zurück, während die zweiten Licht-Sensorstrahlen 13 zwischen dem zweiten Sender 10 und dem zweiten Empfänger 11 eine zweite Signalstrecke S2 zurücklegen.

Die Sender 8, 10 erzeugen jeweils einen Licht-Sensorstrahlen-Vorhang mit den ersten bzw. zweiten Licht-Sensorstrahlen 12, 13. Die ersten Licht-Sensorstrahlen 12 in dem ersten Licht-Sensorstrahlen-Vorhang verlaufen jeweils parallel zueinander und zu der Materialbahn 7. Sie verlaufen in unterschiedlichen senkrechten Abständen zueinander. Die zweiten Licht-Sensorstrahlen 13 in dem zweiten Licht-Sensorstrahlen-Vorhang verlaufen jeweils parallel zueinander. Sie verlaufen in unterschiedlichen senkrechten Abständen zueinander. Die untersten ersten Licht-Sensorstrahlen 12 in dem ersten Licht-Sensorstrahlen-Vorhang verlaufen senkrecht unter der Unterseite 18 der Materialbahn 7 benachbart zu dieser im Bereich der ersten Sensoreinheit 4. Die untersten zweiten Licht-Sensorstrahlen 13 in dem zweiten Licht-Sensorstrahlen-Vorhang verlaufen senkrecht unter der Unterseite 18 benachbart zu dieser im Bereich der zweiten Sensoreinheit 5. Die obersten ersten Licht-Sensorstrahlen 12 in dem ersten Licht-Sensorstrahlen-Vorhang verlaufen senkrecht oberhalb der Oberseite 17 der Materialbahn 7 benachbart zu dieser im Bereich der ersten Sensoreinheit 4. Die obersten zweiten Licht-Sensorstrahlen 13 in dem zweiten Licht-Sensorstrahlen-Vorhang verlaufen senkrecht oberhalb der Oberseite 17 benachbart zu dieser im Bereich der zweiten Sensoreinheit 5. Zwischen den obersten und untersten ersten bzw. zweiten Licht-Sensorstrahlen 12, 13 sind weitere Licht-Sensorstrahlen 12, 13 vorgesehen. Nachdem die Licht-Sensorstrahlen 12, 13 sich auch über die Dicke der Materialbahn 7 erstrecken, ist so auch deren Dicke durch die Sensoreinrichtung 2 bestimmbar.

Nachfolgend wird die Funktionsweise der Materialfehler-Erfassungs-Vorrichtung 1 im Betrieb näher erläutert. Die Oberseite 17 der Materialbahn 7 wird überwacht. Die Materialbahn 7 wird in der Transportrichtung 6 über die Transporteinrichtung mit einer Transportgeschwindigkeit transportiert. Die Sender 8, 10 senden Licht-Sensorstrahlen 12 bzw. 13 aus. Wenn kein von der Oberseite 17 der Materialbahn 7 vorspringender Materialfehler auftritt, werden die ersten Licht-Sensorstrahlen 12 von dem ersten Empfänger 9 und die zweiten Licht-Sensorstrahlen 13 von dem zweiten Empfänger 11 nach den Signalstrecken S1 bzw. S2 empfangen. Die Signal-Auswertungseinheit 3 gibt kein Fehlersignal aus.

Es kann vorkommen, dass nur der erste Empfänger 9 oder nur der zweite Empfänger 11 zeitweise nicht alle bzw. keine ersten bzw. zweiten Licht-Sensorstrahlen 12, 13 empfängt. In diesem Fall gibt es zwei Verfahrensweisen, die je nach Anwendung der Materialbahnüberwachung zu wählen sind. Die Detektion wird entsprechend der Signal-Auswertungseinheit 3 mitgeteilt, die jedoch keine Fehlermeldung ausgibt. Es wird dann davon ausgegangen, dass eine Fehlmeldung vorliegt. Da dadurch keine Lokalisierung möglich ist, könnte man dies aber ebenso als kritischen Materialfehler betrachten.

Wenn sowohl der erste Empfänger 9 als auch der zweite Empfänger 11 zeitweise nicht alle bzw. keine ersten Licht-Sensorstrahlen 12 bzw. zweiten Licht-Sensorstrahlen 13 empfängt, so gibt die Signal-Auswertungseinheit 3 eine Fehlermeldung aus. Ein erhabener Materialfehler 20 liegt dann an der Oberseite 17 der Materialbahn 7 vor.

Die Höhe des Materialfehlers 20 senkrecht zu der Oberseite 17 wird anhand der Licht-Sensorstrahlen 12 bzw. 13 ermittelt, die in dem jeweiligen Licht-Sensorstrahlen-Vorhang unterbrochen werden. Je mehr Licht-Sensorstrahlen 12 bzw. 13 unterbrochen werden, desto höher ist der Materialfehler 20.

Die Länge des Materialfehlers 20 in der Transportrichtung 6 wird anhand der Zeit bestimmt, während welcher die ersten und/oder zweiten Licht-Sensorstrahlen 12, 13 unterbrochen sind. Die Transportgeschwindigkeit der Materialbahn 7 bzw. deren Verlauf über die Zeit ist bekannt.

Der Abstand des Materialfehlers 20 zu den Längsrändern 14, 15 in der Querrichtung 16 wird anhand der Zeitdauer ermittelt, die zwischen der Unterbrechung der ersten Licht-Sensorstrahlen 12 und der zweiten Licht-Sensorstrahlen 13 vergeht. Je kürzer diese Zeit ist, desto näher befindet sich der Materialfehler 20 bei den Empfängern 9, 11, die - wie bereits angegeben ist - einen kleineren Abstand in der Transportrichtung 6 zueinander als die Sender 8, 10 haben. Die Transportgeschwindigkeit in der Transportrichtung 6 ist bekannt bzw. ist der Verlauf der Transportgeschwindigkeit über die Zeit bekannt.

Der Winkel des Materialfehlers 20 zu den Längsrändern 14, 15 wird so auch ermittelt, und zwar durch Verwertung der Unterschiedlichkeit der Sensorstrahlenverdeckungen.

Bezug nehmend auf Fig. 3, ist eine Sensoreinrichtung 2 zwischen einer Vorrats-Rolle 21 und einer Bearbeitungs-Einrichtung 22 angeordnet. Die Sensoreinrichtung 2 entspricht prinzipiell der Sensoreinrichtung 2 gemäß der vorherigen Beschreibung, auf die verwiesen wird. Sie ist stromabwärts zu der Vorrats-Rolle 21 angeordnet, auf der die Materialbahn 7 aufgewickelt ist. Die Materialbahn 7 wird über die Sensoreinrichtung 2 zu der Bearbeitungs-Einrichtung 22 in der Transportrichtung 6 transportiert. Die Bearbeitungs-Einrichtung 22 kann eine Druck-Einrichtung, bevorzugter eine Digital-Druck-Einrichtung, eine Riffel-Einrichtung, eine Beleimungs-Einrichtung, eine Kaschier-Einrichtung, eine Heiz-Einrichtung, eine Längsschneide-Einrichtung, eine Querschneide-Einrichtung, eine Weiche, eine Stapel-Einrichtung oder dergleichen sein.

Die Sensoreinrichtung 2 ist vorzugweise an einem Gestell 23 angeordnet. In der Sensoreinrichtung 2 wird die Materialbahn 7 um mehrere Umlenk-Rollen 24 bis 28 geführt, die drehbar sind. Bei der ersten Umlenk-Rolle 24 wird die Materialbahn 7 um etwa 90° nach unten abgelenkt. Stromabwärts zu der ersten Umlenk-Rolle 24 sind die zweiten und dritten Umlenk-Rollen 25 bzw. 26 angeordnet. Zwischen diesen Umlenk-Rollen 25, 26 ist die erste Sensoreinheit 4 zur Überwachung der Materialbahn 7 angeordnet.

Stromabwärts zu der dritten Umlenk-Rolle 26 ist die vierte Umlenk-Rolle 27 angeordnet. Die Materialbahn 7 wird bei der dritten Umlenk-Rolle 26 wieder umgelenkt. Zwischen den dritten und vierten Umlenk-Rollen 26 bzw. 27 ist die zweite Sensoreinheit 5 zur Überwachung der Materialbahn 7 angeordnet. Die Sender 8, 10 bzw. Empfänger 9, 11 messen vorzugsweise über die Bahneinlaufpunkte der Rollen 24 bis 28 hinweg, so dass sich Schwingungen der Materialbahn 7 weniger störend bemerkbar machen. Die Materialbahn 7 liegt bei den Sensoreinheiten 4, 5 im Gegensatz zu der Sensoreinrichtung 2 gemäß Fig. 1, 2 in unterschiedlichen Ebenen, die schräg zueinander verlaufen. Stromabwärts zu der vierten Umlenk-Rolle 27 liegt die fünfte Umlenk-Rolle 28, bei der die Materialbahn 7 um etwa 90° wieder umgelenkt wird, sodass die Materialbahn 7 wieder ihre ursprüngliche Transportrichtung 6 vor der Sensoreinrichtung 2 hat. Die Umlenk-Rollen 24 bis 28 sorgen für eine kontrollierte bzw. erhöhte Bahnspannung.

Die jeweils untersten, ersten Licht-Sensorstrahlen 12 und die jeweils untersten, zweiten Licht-Sensorstrahlen 13 treffen auf die Rollen 25, 26 bzw. 27, während die anderen ersten bzw. zweiten Licht-Sensorstrahlen 12, 13 oberhalb der untersten Licht-Sensorstrahlen 12, 13 bzw. senkrecht zu diesen angeordnet sind. So ist neben den Detektierung von Materialfehlern 20 auch die Dicke der Materialbahn 7 mit der ersten bzw. zweiten Sensoreinheit 4, 5 bestimmbar.

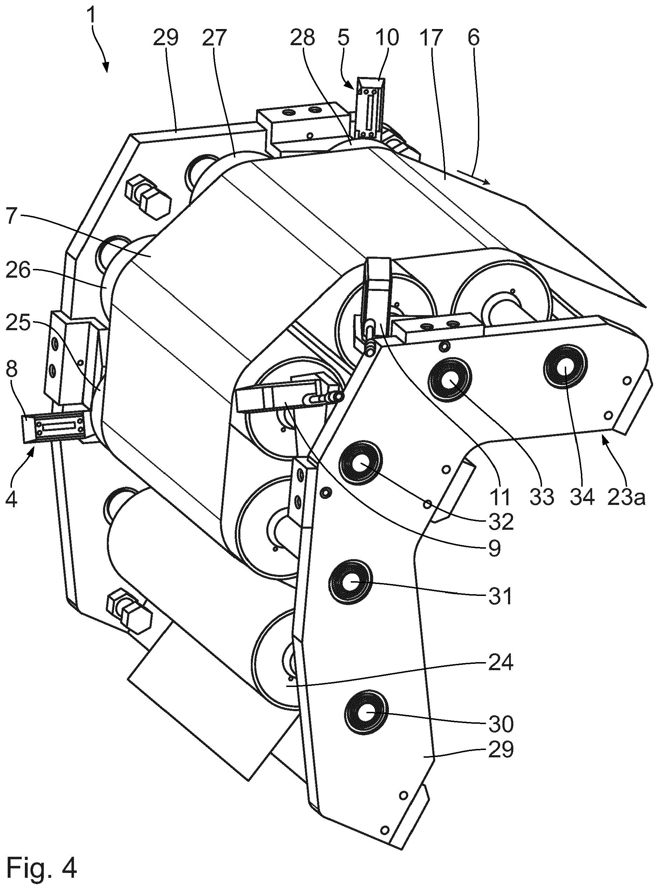

Nachfolgend wird unter Bezugnahme Fig. 4 eine Materialfehler-Erfassungs-Vorrichtung 1 detaillierter erläutert, die prinzipiell der gemäß Fig. 3 entspricht. Identische Bauteile erhalten dieselben Bezugszeichen wie der vorherigen Ausführungsform, auf die hiermit verwiesen wird. Konstruktiv unterschiedliche, jedoch funktionell gleichartige Bauteile erhalten die gleichen Bezugszeichen mit einem nachgeordneten "a". Das Gestell 23a hat zwei Gestellteile 29, die im Wesentlichen identisch ausgeführt sind und parallel zueinander verlaufen. Die Umlenk-Rollen 24 bis 28 haben jeweils eine Achse 30 bis 34, die in den Gestellteilen 29 drehbar gelagert sind und parallel zueinander verlaufen.

Bei der ersten Umlenk-Rolle 24 befindet sich der Materialbahn-Einlaufpunkt. Bei der fünften Umlenk-Rolle 28 befindet sich der Materialbahn-Auslaufpunkt. Die Materialbahn 7 hat nach der Umlenk-Rolle 28 eine andere Richtung als vor der Umlenk-Rolle 24. Die Sender 8, 10 sind an dem einen Gestellteil 29 befestigt, während die Empfänger 9, 11 an dem anderen Gestellteil 29 angeordnet sind. Die erste Sensoreinheit 4 ist zwischen den zweiten und dritten Umlenk-Rollen 25 bzw. 26 angeordnet, während die zweite Sensoreinheit 5 zwischen den vierten und fünften Umlenk-Rollen 27 bzw. 28 angeordnet ist.

Im Bereich der ersten Sensoreinheit 4 verläuft die Materialbahn 7 im Wesentlichen senkrecht zu der Materialbahn 7 im Bereich der zweiten Sensoreinheit 5. Eine andere Orientierung ist alternativ möglich.

Die Sender 8, 10 sind wieder derart angeordnet, dass diese die Oberseite 17 der Materialbahn 7 überwachen. Die Empfänger 9, 11 sind derart angeordnet, dass diese die Licht-Sensorstrahlen 12 bzw. 13 empfangen, die wieder parallel zu der Materialbahn 7 im Bereich der jeweiligen Sensoreinheit 4, 5 verlaufen.

Die untersten ersten bzw. zweiten Licht-Sensorstrahlen 12, 13 sind auf die Umlenk-Rollen 25, 26 bzw. 27 gerichtet.

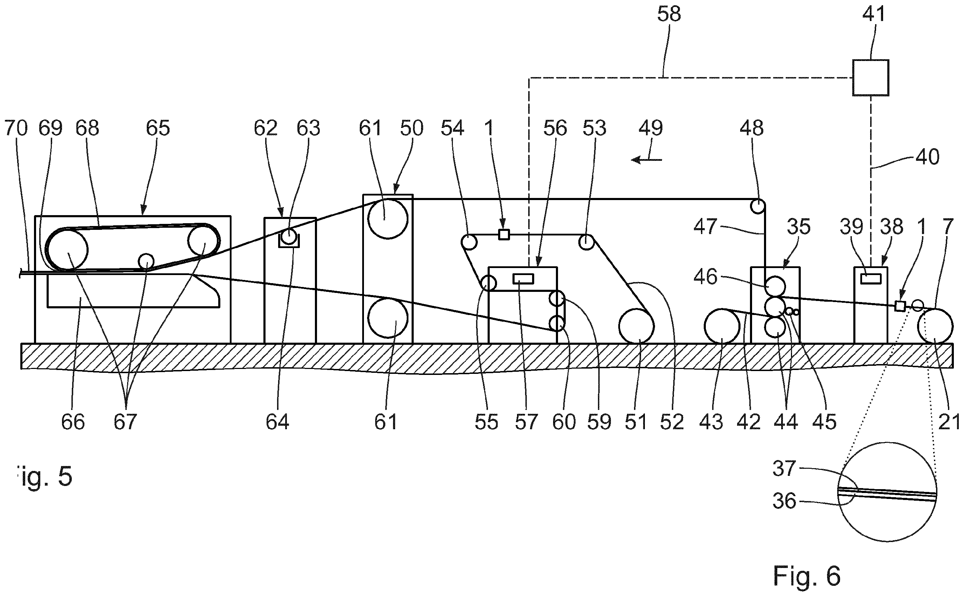

Nachfolgend wird unter Bezugnahme auf die Fig. 5 bis 7 eine Wellpappe-Anlage beschrieben, in der mindestens eine Materialfehler-Erfassungs-Vorrichtung 1 gemäß den Fig. 1 bis 4 angeordnet ist.

Von der Vorrats-Rolle 21 wird die Materialbahn 7 der Maschine 35 zugeführt. Bei der Materialbahn 7 handelt es sich um eine endlose Papierbahn. Die Materialbahn 7 stellt eine Grundbahn für die in der Maschine 35 hergestellte Wellpappe dar. Fig. 6 zeigt eine vergrößerte Seitenansicht der Materialbahn 7. Diese weist eine Material-Grundschicht 36 mit einer die Druckqualität steigernden Beschichtung 37, einem sogenannten Primer, auf. Das Dickenverhältnis zwischen der Material-Grundschicht 36 und der Beschichtung 37 ist im Verhältnis nicht zutreffend dargestellt. Die Beschichtung 37 muss nicht zwingend auf der aufgerollten Materialbahn 7 vorliegen, sondern kann auch später nach dem Abrollen von der Vorrats-Rolle 21 noch auf die Materialbahn 7 aufgebracht werden.

Zwischen der Vorrats-Rolle 21 und der Maschine 35 durchläuft die Materialbahn 7 ein erstes Digital-Druckwerk 38 mit einem Druckkopf 39, welcher nach Maßgabe eines Druckauftrags die Oberseite 17 der Materialbahn 7 bedruckt. Das Digital-Druckwerk 38 steht über eine Signalleitung 40 mit einer Auftrags-Steuereinrichtung 41 in Verbindung.

Die bedruckte Materialbahn 7 wird in der Maschine 35 mit einer weiteren bzw. zweiten Materialbahn 42 zusammengeführt, die von einer zweiten Vorrats-Rolle 43 abgerollt wird. Nach dem Abrollen wird die zweite Materialbahn 42 in der Maschine 35 zur Erzeugung einer Wellung zwischen benachbart zueinander angeordneten Riffel-Walzen 44 hindurchgeführt. Die zweite Materialbahn 42 liegt nach dieser Hindurchführung als Wellbahn vor.

Anschließend werden die Spitzen der gewellten Materialbahn 42 in einer Beleimungs-Einrichtung 45 beleimt und die gewellte Materialbahn 42 in der Maschine 35 mit der Materialbahn 7 in einem Spalt zwischen einer Andrück-Walze 46 und einer der Riffel-Walzen 44 zusammengedrückt und miteinander verbunden. Aus der Maschine 35 wird eine einseitig kaschierte Wellpappebahn 47 nach oben abgeführt und um eine Umlenk-Walze 48 in eine Arbeitsrichtung 49 umgelenkt. Die Wellpappebahn 47 wird anschließend in eine Vorheiz-Einrichtung 50 geführt.

Der Maschine 35 ist eine dritte Vorrats-Rolle 51 für eine dritte Materialbahn 52 als weitere Deckbahn für die Wellpappebahn 47 in der Arbeitsrichtung 49 nachgeordnet. Es ist auch zum Teil üblich, die dritte Materialbahn 52 als Kaschierbahn zu bezeichnen, wobei in diesem Fall die erste Materialbahn 7 als Deckbahn bezeichnet wird.

Die dritte Materialbahn 52 wird nach der zweiten Vorrats-Rolle 51 zunächst um eine Umlenk-Walze 53 so umgelenkt, dass sie in der Arbeitsrichtung 49 geführt wird. Anschließend wird die dritte Materialbahn 52 durch zwei weitere Umlenk-Walzen 54, 55 um 180° so gedreht, dass ihre zwischen den Umlenk-Walzen 53, 54 nach unten weisende Seite nun nach oben weist, wobei die dritte Materialbahn 52 nach der Umlenk-Walze 55 entgegen der Arbeitsrichtung 49 geführt wird.

Nach der Umlenk-Walze 55 durchläuft die dritte Materialbahn 52 ein zweites Digital-Druckwerk 56, welches zusammen mit dem ersten Digital-Druckwerk 38 eine digitale Druckeinrichtung bildet. Die nach der Umlenk-Walze 55 nach oben weisende Seite der dritten Materialbahn 52 wird im zweiten Digital-Druckwerk 56 von einem Druckkopf 57 entsprechend einem Druckauftrag bedruckt. Die dritte Materialbahn 52 weist ebenfalls einen zweischichtigen Aufbau mit einer Grund-Materialschicht und einer Beschichtung derart auf, dass mittels des Druckkopfs 57 des zweiten Digital-Druckwerks 56 die Beschichtung der dritten Materialbahn 52 bedruckt wird. Auch die Beschichtung der dritten Materialbahn 52 kann nach dem Abrollen und vor dem zweiten Digital-Druckwerk 56 aufgebracht werden.

Das zweite Digital-Druckwerk 56 steht zur Druckauftragssteuerung über eine Signalleitung 58 mit der Auftrags-Steuereinrichtung 41 in Verbindung. Nach dem Passieren des Digital-Druckwerks 56 wird die dritte Materialbahn 52 mit Hilfe weiterer Umlenk-Walzen 59, 60 wieder um im Wesentlichen 180° umgelenkt, sodass die dritte Materialbahn 52 wieder im Wesentlichen in der Arbeitsrichtung 49 gefördert wird.

Die dritte Materialbahn 52 wird nach der Umlenk-Walze 60 der Vorheiz-Einrichtung 50 zugeführt. Diese weist zwei übereinander angeordnete, beheizbare Heiz-Walzen 61 auf. Die Wellpappebahn 47 und die dritte Materialbahn 52 laufen übereinander und umschlingen teilweise die jeweiligen Heiz-Walzen 61.

Hinter der Vorheiz-Einrichtung 50 ist ein Leimwerk 62 mit einer Beleimungs-Walze 63 angeordnet, die teilweise in ein Leimbad 64 eintaucht. Die gewellte Materialbahn 42 der Wellpappebahn 47 befindet sich in Kontakt mit der Beleimungs-Walze 63.

Hinter dem Leimwerk 62 ist eine Heiz-Andrückvorrichtung 65 angeordnet, die einen horizontalen, sich in der Arbeitsrichtung 49 erstreckenden Tisch 66 mit Heizplatten aufweist. Oberhalb des Tisches 66 ist ein über drei Walzen 67 umgelenkter, angetriebener, endloser Andruck-Gurt 68 vorgesehen.

Zwischen dem Andruck-Gurt 68 und dem Tisch 66 ist ein Anpressspalt 69 gebildet, durch den die Wellpappebahn 47 und die dritte Materialbahn 52 geführt sind und dort aneinander gedrückt werden. In der Heiz-Andrückvorrichtung 65 wird eine dreilagige Wellpappebahn 70 gebildet.

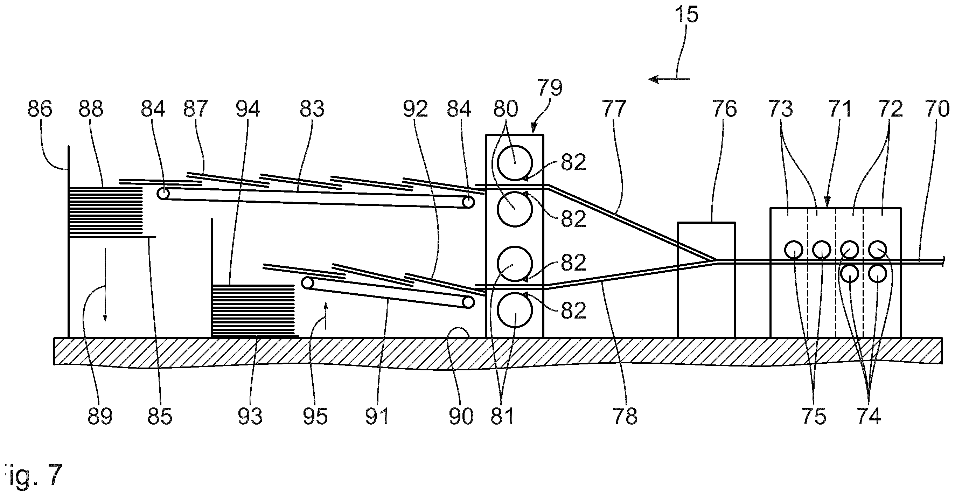

Fig. 7 zeigt einen zweiten Teil der Wellpappe-Anlage im Anschluss an den Austritt der Wellpappebahn 70 aus der Heiz-Andrückvorrichtung 65. In der Arbeitsrichtung 49 nach der Heiz-Andrückvorrichtung 65 ist eine Längsschneide-Rill-Einrichtung 71 angeordnet, die aus zwei hintereinander angeordneten Rill-Stationen 72 sowie zwei hintereinander angeordneten Längsschneide-Stationen 73 gebildet ist. Die Rill-Stationen 72 weisen jeweils paarweise übereinander angeordnete Rill-Werkzeuge 74 auf, zwischen denen die Wellpappebahn 70 hindurchgeführt ist. Die Längsschneide-Stationen 73 weisen jeweils drehantreibbare Messer 75 auf, die mit der Wellpappebahn 70 zur Längsdurchtrennung derselben in Eingriff bringbar sind.

In der Arbeitsrichtung 49 hinter der Längsschneide-Rill-Einrichtung 71 ist eine Weiche 76 angeordnet, in der längs geschnittene Bahnabschnitte 77, 78 der Wellpappebahn 70 voneinander getrennt werden. Die Bahnabschnitte 77, 78 werden nachfolgend einer Querschneide-Einrichtung 79 zugeführt. Diese weist für den oberen Bahnabschnitt 77 ein oberes Querschneide-Walzenpaar 80 und für den unteren Bahnabschnitt 78 ein unteres Querschneide-Walzenpaar 81 auf. Die Walzen der Walzenpaare 80, 81 tragen jeweils einen sich radial nach außen erstreckenden und senkrecht zu der Arbeitsrichtung 49 verlaufenden Messerbalken 82. Die Messerbalken 82 eines Querschneide-Walzenpaares 80, 81 wirken zur Querdurchtrennung der Bahnabschnitte 77, 78 zusammen. Dem oberen Querschneide-Walzenpaar 80 ist ein oberes Förderband 83 nachgeordnet, welches um drehantreibbare Walzen 84 umgelenkt wird.

Hinter dem oberen Förderband 83 ist eine Ablage 85 mit vertikal verlaufendem Anschlag 86 angeordnet, auf der aus dem Bahnabschnitt 77 mittels der Querschneide-Einrichtung 79 geschnittene Wellpappe-Bögen 87 einen Stapel 88 bildend gestapelt werden. Die Ablage 85 ist, wie in Fig. 7 durch einen Richtungspfeil 89 angedeutet, in der Höhe verstellbar. Insbesondere kann die Ablage 85 zum Weitertransport des Stapels 88 bis zu einem Maschinenboden 90, der die Wellpappe-Anlage trägt, abgesenkt werden.

Dem unteren Querschneide-Walzenpaar 81 ist ein weiteres, unteres Förderband 91 nachgeordnet, das Wellpappe-Bögen 92, die mittels der Querschneide-Einrichtung 79 aus dem Bahnabschnitt 78 geschnitten wurden, auf einer weiteren Ablage 93 stapelt. Zur Anpassung an die Höhe des Stapels 94 kann das untere Förderband 91 angehoben werden, wie durch einen Richtungspfeil 95 angedeutet.

Wie bereits erwähnt, ist die Materialfehler-Erfassungs-Vorrichtung 1 in der Wellpappe-Anlage angeordnet.

Beispielsweise ist die Materialfehler-Erfassungs-Vorrichtung 1 zwischen der Vorrats-Rolle 21 und der Maschine 35 angeordnet.

Vorteilhafterweise ist diese zwischen der Vorrats-Rolle 21 und dem Digital-Druckwerk 38 angeordnet.

Alternativ und/oder zusätzlich ist die Materialfehler-Erfassungs-Vorrichtung 1 vorzugsweise zwischen der Vorrats-Rolle 51 und dem Digital-Druckwerk 56 angeordnet.

Alternativ und/oder zusätzlich ist die Materialfehler-Erfassungs-Vorrichtung 1 zwischen der Vorrats-Rolle 51 und dem Digital-Druckwerk 56 angeordnet.

Wenn der Primerauftrag inline erfolgt, ist die Materialbahnüberwachung sinnvollerweise nach diesem Prozessschritt angeordnet, da z.B. durch den Feuchteeintrag eine kritische Bahnwellung erzeugt werden kann.

Gemäß einer alternativen Ausführungsform wird keine dritte Materialbahn 52 verwendet. Gemäß einer alternativen Ausführungsform werden weitere Materialbahnen verwendet.

## Patentansprüche

1. Anlage zur Bearbeitung einer Papierbahn oder Wellpappebahn,
a) mit einer ersten Vorrats-Einrichtung (21) zur Bevorratung der zu bearbeitenden Papierbahn oder Wellpappebahn (7), und
b) mit einer stromabwärts zu der ersten Vorrats-Einrichtung (21) angeordneten Druck-Einrichtung (38) zum Bedrucken der Papierbahn oder Wellpappebahn (7),
**gekennzeichnet durch**
c) eine Vorrichtung zur Erfassung von Materialfehlern (20) an der entlang einer Transportrichtung (6) bewegten Papierbahn oder Wellpappebahn (7), umfassend
i) eine Sensoreinrichtung (2)
- mit einer ersten Sensoreinheit (4)
-- mit einem ersten Sender (8) zum Aussenden erster Sensorstrahlen (12), und
-- mit einem dem ersten Sender (8) zugeordneten, ersten Empfänger (9) zum Empfangen der ersten Sensorstrahlen (12),
-- wobei die ersten Sensorstrahlen (12) parallel zu der zu überwachenden Materialflächenseite (17) der Papierbahn oder Wellpappebahn (7) zur Erfassung der Materialfehler (20) verlaufen und eine erste Signalstrecke S1 zwischen dem ersten Sender (8) und dem ersten Empfänger (9) zurücklegen, und
- mit mindestens einer zweiten Sensoreinheit (5)
-- mit einem zweiten Sender (10) zum Aussenden zweiter Sensorstrahlen (13), und
-- mit einem dem zweiten Sender (10) zugeordneten, zweiten Empfänger (11) zum Empfangen der zweiten Sensorstrahlen (13),
-- wobei die zweiten Sensorstrahlen (13) parallel zu der zu überwachenden Materialflächenseite (17) der Papierbahn oder Wellpappebahn (7) zur Erfassung der Materialfehler (20) verlaufen und eine zweite Signalstrecke S2 zwischen dem zweiten Sender (10) und dem zweiten Empfänger (11) zurücklegen,
- wobei die erste Sensoreinheit (4) und die zweite Sensoreinheit (5) derart ausgerichtet sind, dass sich der Abstand der ersten Sensorstrahlen (12) und der zweiten Sensorstrahlen (13) zueinander in Bezug auf die Transportrichtung (6) über ihre Signalstrecke S1, S2 ändert, und
ii) eine Signal-Auswertungseinheit (3), die mit dem ersten Empfänger (9) und dem zweiten Empfänger (11) zur Auswertung der erfassten Materialfehler (20) in Signalverbindung steht,
iii) wobei die Vorrichtung zur Erfassung von Materialfehlern (20) an der Papierbahn oder Wellpappebahn (7) zwischen der ersten Vorrats-Einrichtung (21) und der Druck-Einrichtung (38) zur Erfassung von für das Bedrucken problematischen Materialfehlern (20) an der Papierbahn oder Wellpappebahn (7) angeordnet ist.

2. Anlage nach Anspruch 1, **dadurch gekennzeichnet, dass** die Signal-Auswertungseinheit (3) anhand einer Transportgeschwindigkeit der Papierbahn oder Wellpappebahn (7) in der Transportrichtung (6) und einer Zeitdauer, die zwischen der Erfassung des Materialfehlers (20) durch die erste Sensoreinheit (4) und die Erfassung durch die mindestens zweite Sensoreinheit (5) verstreicht, den Lagewinkel des Materialfehlers (20), die Breite des Materialfehlers (20) und/oder insbesondere die Position des Materialfehlers (20) bezüglich der Papierbahn oder Wellpappebahn (7) ermittelt.

3. Anlage nach Anspruch 1 oder 2, **dadurch gekennzeichnet, dass** die ersten und/oder zweiten Sensorstrahlen (12, 13) schräg zu der Transportrichtung (6) über die Breite der Papierbahn oder Wellpappebahn (7) verlaufen.

4. Anlage nach einem der vorherigen Ansprüche, **dadurch gekennzeichnet, dass** der erste Sender (8) und der zweite Sender (10) bezogen auf die Transportrichtung (6) einen Senderabstand SA zueinander haben, wobei der erste Empfänger (9) und der zweite Empfänger (11) bezogen auf die Transportrichtung (6) einen Empfängerabstand EA zueinander haben, wobei sich der Senderabstand SA und der Empfängerabstand EA um mindestens 10 %, bevorzugter um mindestens 50 %, am bevorzugtesten um mindestens 100 %, voneinander unterscheiden.

5. Anlage nach einem der vorherigen Ansprüche, **dadurch gekennzeichnet, dass** die ersten und zweiten Sensorstrahlen (12, 13) bezogen auf eine zu der Transportrichtung (6) senkrecht verlaufenden Senkrechten (19) der Papierbahn oder Wellpappebahn (7) im Betrag einen unterschiedlichen Winkel W1, W2 einschließen.

6. Anlage nach einem der vorherigen Ansprüche, **dadurch gekennzeichnet, dass** der erste Sender (8) und/oder der zweite Sender (10) einen Sensorstrahlen-Vorhang mit parallel zueinander verlaufenden ersten bzw. zweiten Sensorstrahlen (12, 13) erzeugen, wobei die ersten bzw. zweiten Sensorstrahlen (12, 13) unterschiedliche senkrechte Abstände zu der zu überwachenden Materialflächenseite (17) der Papierbahn oder Wellpappebahn (7) zur Ermittlung der Höhe der erfassten Materialfehler (20) aufweisen.

7. Anlage nach Anspruch 6, **dadurch gekennzeichnet, dass** der Sensorstrahlen-Vorhang eine oder beide der Materialflächenseiten (17, 18) der Papierbahn oder Wellpappebahn (7) erfasst.

8. Anlage nach Anspruch 6 oder 7, **dadurch gekennzeichnet, dass** der Sensorstrahlen-Vorhang derart ausgebildet und angeordnet ist, dass er sich auch über die Dicke der Papierbahn oder Wellpappebahn (7) zur Erfassung derselben erstreckt.

9. Anlage nach einem der vorherigen Ansprüche, **dadurch gekennzeichnet, dass** die Signal-Auswertungseinheit (3) die erfasste Zeitdauer, die zwischen der Erfassung des Materialfehlers (20) durch die erste Sensoreinheit (4) und die Erfassung durch die mindestens zweite Sensoreinheit (5) verstreicht, in Differenzstrecken zur Positionsberechnung des Materialfehlers (20) während einer Beschleunigung oder Verzögerung der Papierbahn oder Wellpappebahn (7) umrechnet.

10. Anlage nach einem der vorherigen Ansprüche, **dadurch gekennzeichnet, dass** bei einem erfassten Materialfehler (20) eine entsprechende Verstellung nachfolgender Bearbeitungs-Einrichtungen zum Vermeiden einer Kollision mit dem erhabenen Materialfehler (20) erfolgt.

11. Anlage nach einem der vorherigen Ansprüche, **dadurch gekennzeichnet, dass** gegebenenfalls eine Verstellung der Druck-Einrichtung (38) und/oder der Papierbahn oder Wellpappebahn (7) zumindest im Bereich der Druck-Einrichtung (38) zum Vermeiden einer Kollision zwischen der Druck-Einrichtung (38) und dem erfassten, erhabenen Materialfehler (20) erfolgt.

12. Anlage nach einem der vorherigen Ansprüche, **dadurch gekennzeichnet, dass** ein Schutz der Druck-Einrichtung (38) durch mindestens eine Schutz-Einrichtung vor einem für die Druck-Einrichtung (38) gefährlichen Materialfehler (20) erfolgt.

13. Anlage nach einem der vorherigen Ansprüche, **gekennzeichnet durch** eine zweite Vorrats-Einrichtung (43) zur Bevorratung einer zweiten Materialbahn (42) und eine Riffel-Einrichtung (44) zum Riffeln der zweiten Materialbahn (42), wobei eine Verbindungs-Einrichtung (35) die bedruckte Materialbahn (7) und die geriffelte zweite Materialbahn (42) miteinander verbindet.

14. Verfahren zur Erfassung erhabener Materialfehler (20) an einer entlang einer Transportrichtung (6) bewegten Papierbahn oder Wellpappebahn (7), umfassend die Schritte
- Bereitstellen einer ersten Vorrats-Einrichtung (21) zur Bevorratung der zu bearbeitenden Papierbahn oder Wellpappebahn (7),
- Bereitstellen einer stromabwärts zu der ersten Vorrats-Einrichtung (21) angeordneten Druck-Einrichtung (38) zum Bedrucken der Papierbahn oder Wellpappebahn (7), und
- Bereitstellen einer Vorrichtung zur Erfassung von Materialfehlern (20) an der entlang der Transportrichtung (6) bewegten Papierbahn oder Wellpappebahn (7), umfassend
a) eine Sensoreinrichtung (2)
aa) mit einer ersten Sensoreinheit (4)
i) mit einem ersten Sender (8) zum Aussenden erster Sensorstrahlen (12), und
ii) mit einem dem ersten Sender (8) zugeordneten, ersten Empfänger (9) zum Empfangen der ersten Sensorstrahlen (12),
iii) wobei die ersten Sensorstrahlen (12) parallel zu der zu überwachenden Materialflächenseite (17) der Papierbahn oder Wellpappebahn (7) zur Erfassung der Materialfehler (20) verlaufen und eine erste Signalstrecke S1 zwischen dem ersten Sender (8) und dem ersten Empfänger (9) zurücklegen, und
ab) mit mindestens einer zweiten Sensoreinheit (5)
i) mit einem zweiten Sender (10) zum Aussenden zweiter Sensorstrahlen (13), und
ii) mit einem dem zweiten Sender (10) zugeordneten, zweiten Empfänger (11) zum Empfangen der zweiten Sensorstrahlen (13),
iii) wobei die zweiten Sensorstrahlen (13) parallel zu der zu überwachenden Materialflächenseite (17) der Papierbahn oder Wellpappebahn (7) zur Erfassung der Materialfehler (20) verlaufen und eine zweite Signalstrecke S2 zwischen dem zweiten Sender (10) und dem zweiten Empfänger (11) zurücklegen,
ac) wobei die erste Sensoreinheit (4) und die zweite Sensoreinheit (5) derart ausgerichtet sind, dass sich der Abstand der ersten Sensorstrahlen (12) und der zweiten Sensorstrahlen (13) zueinander in Bezug auf die Transportrichtung (6) über ihre Signalstrecke S1, S2 ändert, und
b) eine Signal-Auswertungseinheit (3), die mit dem ersten Empfänger (9) und dem zweiten Empfänger (11) zur Auswertung der erfassten Materialfehler (20) in Signalverbindung steht,
- wobei die Vorrichtung zur Erfassung von Materialfehlern (20) an der Papierbahn oder Wellpappebahn (7) zwischen der ersten Vorrats-Einrichtung (21) und der Druck-Einrichtung (38) zur Erfassung von für das Bedrucken problematischen Materialfehlern (20) an der Papierbahn oder Wellpappebahn (7) angeordnet ist.

15. Verfahren nach Anspruch 14, **dadurch gekennzeichnet, dass** die Signal-Auswertungseinheit (3) nur dann eine Fehlermeldung ausgibt, wenn der Materialfehler (20) außerhalb von variabel definierbaren Toleranzgrenzen bezüglich Höhe und/oder Position über der Bahnbreite und/oder der Länge liegt.

16. Verfahren nach Anspruch 14 oder 15, **dadurch gekennzeichnet, dass** die Signal-Auswertungseinheit (3) eine Fehlermeldung ausgibt, wenn die erste Sensoreinheit (4) und/oder die zweite Sensoreinheit (5) einen Materialfehler (20) detektiert.

17. Verfahren nach einem der Ansprüche 14 bis 16, **dadurch gekennzeichnet, dass** ein Schutz der Druck-Einrichtung (38) vor einem für die Druck-Einrichtung (38) kritischen Materialfehler (20) erfolgt, wenn ein entsprechender Materialfehler (20) erfasst wird.

## Claims

1. Installation for processing a a paper web or corrugated cardboard web, the installation comprising
a) a first supply device (21) for supplying the paper web or corrugated cardboard web (7) to be processed, and
b) a printing device (38) arranged downstream of the supply device (21) for applying a print to the paper web or corrugated cardboard web (7),
**characterized by**
c) a device for the detection of material defects (20) in a paper web or a corrugated cardboard web (7) moved in a feed direction (6), the device comprising
i) a sensor device (2) with;
- a first sensor unit (4) comprising
-- a first emitter (8) for emitting first sensor beams (12), and
-- a first receiver (9) assigned to the first emitter (8) for receiving the first sensor beams (12),
-- wherein in order to detect the material defects (20), the first sensor beams (12) run parallel to the material surface (17) to be monitored of the material web (7) and travel along a first signal path S1 between the first emitter (8) and the first receiver (9); and
- at least one second sensor unit (5) comprising
-- a second emitter (10) for emitting second sensor beams (13); and
-- a second receiver (11) assigned to the second emitter (11) for receiving the second sensor beams (13),
--- wherein in order to detect the material defects (20), the second sensor beams (12) run parallel to the material surface (17) to be monitored of the material web (7) and travel along a second signal path S2 between the second emitter (10) and the second receiver (11),
- wherein the first sensor unit (4) and the second sensor unit (5) are oriented in such a way that the distance between the first sensor beams (12) and the second sensor beams (13) relative to the feed direction (6) changes along their signal paths S1, S2, and
ii) a signal evaluation unit (3), which is in signal communication with the first receiver (9) and the second receiver (11) for evaluation of the detected material defects (20),
iii) wherein the device for the detection of material defects (20) in the paper web or corrugated cardboard web (7) is arranged near the paper web or corrugated cardboard web (7) between the first supply device (21) and the printing device (38) for the detection of material defects (20) in the material web (7) that are problematic for printing.

2. Installation according to claim 1, **characterized in that** the signal evaluation unit (3) detects the orientation angle of the material defect (20), the width of the material defect (20) and/or in particular the position of the material defect (20) relative to the paper web or corrugated cardboard web (7) by means of a feed rate of the paper web or corrugated cardboard web (7) in the feed direction (6) and a period of time which passes between the detection of the material defect (20) by the first sensor unit (4) and the detection thereof by the at least second sensor unit (5).

3. Installation according to claim 1 or 2, **characterized in that** the first and/or second sensor beams (12, 13) run obliquely to the feed direction (6) across the width of the paper web or corrugated cardboard web (7).

4. Installation according to one of the preceding claims, **characterized in that** the first emitter (8) and the second emitter (10) have an emitter distance SA between each other relative to the feed direction (6), wherein the first receiver (9) and the second receiver (11) have a receiver distance EA between each other relative to the feed direction (6), wherein the emitter distance SA and the receiver distance EA differ from one another by at least 10%, more preferably by at least 50%, and most preferably by at least 100%.

5. Installation according to one of the preceding claims, **characterized in that** the first and second sensor beams (12, 13) form an angle W1, W2 with a vertical (19) extending perpendicular to the paper web or corrugated cardboard web (7) relative to the feed direction (6), wherein the angles W1, W2, have different absolute values.

6. Installation according to one of the preceding claims, **characterized in that** the first emitter (8) and/or the second emitter (10) generate a sensor beam curtain with first or second sensor beams (12, 13), respectively, which are parallel to each other, wherein the first or second sensor beams (12, 13), respectively, have different vertical distances from the material surface (17) to be monitored of the paper web or corrugated cardboard web (7) in order to determine the height of the detected material defects (20).

7. Installation according to claim 6, **characterized in that** the sensor beam curtain covers one or both of the material surfaces (17, 18) of the paper web or corrugated cardboard web (7).

8. Installation according to claim 6 or 7, **characterized in that** the sensor beam curtain is configured and arranged in such a way that in order to detect the thickness of the paper web or corrugated cardboard web (7), it also runs across the thickness of said paper web or corrugated cardboard web (7).

9. Installation according to one of the preceding claims, **characterized in that** the signal evaluation unit (3) converts the detected period of time that passes between the detection of the material defect (20) by the first sensor unit (4) and the detection of the material defect (20) by the at least second sensor unit (5) into path length differences for determining the position of the material defect (20) while the feed rate of the paper web or corrugated cardboard web (7) is being increased or reduced.

10. Installation according to one of the preceding claims, **characterized in that** when a material defect (20) is detected, subsequent processing devices are adjusted accordingly to prevent collision with the projecting material defect (20).

11. Installation according to one of the preceding claims, **characterized in that** if necessary, the printing device (38) and/or the paper web or corrugated cardboard web (7) is/are adjusted at least in the region of the printing device (38) to prevent collision between the printing device (38) and the detected projecting material defect (20).

12. Installation according to one of the preceding claims, **characterized in that** the printing device (38) is protected from material webs (20), which are dangerous to the printing device (38), by means of at least one protection device.

13. Installation according to one of the preceding claims, **characterized by** a second supply device (43) for supplying a second material web (42) and a corrugating device (44) for corrugating the second material web (42), wherein a joining device (35) joins the printed material web (7) to the corrugated second material web (42).

14. Method for the detection of projecting material defects (20) in a paper web or corrugated cardboard web (7) moved in a feed direction (6), the method comprising the steps of
- providing a first supply device (21) for supplying the paper web or corrugated cardboard web (7) to be processed,
- providing a printing device (38) arranged downstream of the first supply device (21) for applying a print to the paper web or corrugated cardboard web (7), and
- providing a device for the detection of material defects (20) in a paper web or a corrugated cardboard web (7) moved in a feed direction (6), the device comprising
a) a sensor device (2) with;
aa) a first sensor unit (4) comprising
i) a first emitter (8) for emitting first sensor beams (12), and
ii) a first receiver (9) assigned to the first emitter (8) for receiving the first sensor beams (12),
iii) wherein in order to detect the material defects (20), the first sensor beams (12) run parallel to the material surface (17) to be monitored of the paper web or corrugated cardboard web (7) and travel along a first signal path S1 between the first emitter (8) and the first receiver (9); and
ab) at least one second sensor unit (5) comprising
i) a second emitter (10) for emitting second sensor beams (13); and
ii) a second receiver (11) assigned to the second emitter (11) for receiving the second sensor beams (13),
iii) wherein in order to detect the material defects (20), the second sensor beams (12) run parallel to the material surface (17) to be monitored of the paper web or corrugated cardboard web (7) and travel along a second signal path S2 between the second emitter (10) and the second receiver (11),
ac) wherein the first sensor unit (4) and the second sensor unit (5) are oriented in such a way that the distance between the first sensor beams (12) and the second sensor beams (13) relative to the feed direction (6) changes along their signal paths S1, S2, and
b) a signal evaluation unit (3), which is in signal communication with the first receiver (9) and the second receiver (11) for evaluation of the detected material defects (20),
- wherein the device for the detection of material defects (20) in the paper web or corrugated cardboard web (7) is arranged near the paper web or corrugated cardboard web (7) between the first supply device (21) and the printing device (38) for the detection of material defects (20) in the material web (7), which are problematic in the printing process.

15. Method according to claim 14, **characterized in that** the signal evaluation unit (3) emits an error message only if the material defect (20) is outside variably definable tolerance limits concerning its height and/or position relative to the width and/or the length of the web.

16. Method according to claim 14 or 15, **characterized in that** the signal evaluation unit (3) emits an error message when the first sensor unit (4) and/or the second sensor unit (5) detects a material defect (20).

17. Method according to one of claims 14 to 16, **characterized in that** the printing device (38) is protected from a material defect (20) critical to the printing device (38) when a material defect (20) of this type is detected.

## Revendications

1. Installation destinée à traiter une bande de papier ou une bande de carton ondulé,
a) avec un premier dispositif de stockage (21) pour l'approvisionnement de la bande de papier ou de la bande de carton ondulé (7) à traiter, et
b) avec un dispositif d'impression (38) agencé en aval du premier dispositif de stockage (21) pour imprimer la bande de papier ou la bande de carton ondulé (7),
**caractérisé par**
c) un équipement pour détecter des défauts de matériau (20) sur la bande de papier ou la bande de carton ondulé (7) déplacée dans un sens de transport (6), comprenant
i) un dispositif de détection (2)
- avec une première unité de détection (4)
-- avec un premier émetteur (8) pour émettre des premiers rayons de détecteur (12), et
-- avec un premier récepteur (9) affecté au premier émetteur (8) pour recevoir les premiers rayons de détecteur (12),
-- dans laquelle les premiers rayons de détecteur (12) courent parallèlement au côté de la surface de matériau (17) à surveiller de la bande de papier ou de la bande de carton ondulé (7) pour détecter les défauts de matériau (20) et parcourent un premier trajet de signal S1 entre le premier émetteur (8) et le premier récepteur (9), et
- avec au moins une deuxième unité de détection (5)
-- avec un deuxième émetteur (10) pour émettre des deuxièmes rayons de détecteur (13), et
-- avec un deuxième récepteur (11) affecté au deuxième émetteur (10) pour recevoir les deuxièmes rayons de détecteur (13),
-- dans laquelle les deuxièmes rayons de détecteur (13) courent parallèlement au côté de la surface de matériau (17) à surveiller de la bande de papier ou de la bande de carton ondulé (7) pour détecter les défauts de matériau (20) et parcourent un deuxième trajet de signal S2 entre le deuxième émetteur (10) et le deuxième récepteur (11),
- dans laquelle la première unité de détection (4) et la deuxième unité de détection (5) sont orientées de telle sorte que la distance mutuelle entre les premiers rayons de détecteur (12) et les deuxièmes rayons de détecteur (13) relativement au sens de transport (6) se modifie sur leur trajet de signal S1, S2, et
ii) une unité d'analyse de signal (3) qui se situe en liaison de signalisation avec le premier récepteur (9) et le deuxième récepteur (11) pour analyser les défauts de matériau (20) détectés,
iii) dans laquelle l'équipement pour détecter des défauts de matériau (20) sur la bande de papier ou la bande de carton ondulé (7) est agencé entre le premier dispositif de stockage (21) et le dispositif d'impression (38) pour détecter sur la bande de papier ou la bande de carton ondulé (7) des défauts de matériau (20) qui posent problème pour l'impression.

2. Installation selon la revendication 1, **caractérisée en ce que** l'unité d'analyse de signal (3) détermine, à l'aide d'une vitesse de la bande de papier ou de la bande de carton ondulé (7) dans le sens de transport (6) et d'une durée qui s'étire entre la détection du défaut de matériau (20) par la première unité de détection (4) et la détection par la au moins deuxième unité de détection (5), l'angle de situation du défaut de matériau (20), la largeur du défaut de matériau (20) et/ou en particulier la position du défaut de matériau (20) par rapport à la bande de papier ou à la bande de carton ondulé (7).

3. Installation selon la revendication 1 ou 2, **caractérisée en ce que** les premiers et/ou deuxièmes rayons de détecteur (12, 13) courent à l'oblique par rapport au sens de transport (6) sur la largeur de la bande de papier ou de la bande de carton ondulé (7).

4. Installation selon l'une quelconque des revendications précédentes, **caractérisée en ce que** le premier émetteur (8) et le deuxième émetteur (10) présentent une distance d'émetteur SA (*Senderabstand*) mutuelle par rapport au sens de transport (6), dans laquelle le premier récepteur (9) et le deuxième récepteur (11) présentent une distance de récepteur EA (*Empfängerabstand*) mutuelle par rapport au sens de transport (6), dans laquelle la distance d'émetteur SA et la distance de récepteur EA se différencient l'une de l'autre d'au moins 10 %, de préférence d'au moins 50 %, le plus préférablement d'au moins 100 %.

5. Installation selon l'une quelconque des revendications précédentes, **caractérisée en ce que** les premiers et deuxièmes rayons de détecteur (12, 13) incluent en valeur un angle (*Winkel*) W1, W2 différent par rapport à une perpendiculaire (19) de la bande de papier ou de la bande de carton ondulé (7) courant perpendiculairement au sens de transport (6).

6. Installation selon l'une quelconque des revendications précédentes, **caractérisée en ce que** le premier émetteur (8) et/ou le deuxième émetteur (10) produisent un rideau de rayons de détecteur avec des premiers et respectivement deuxièmes rayons de détecteur (12, 13) courant parallèlement les uns aux autres, dans laquelle les premiers et respectivement deuxièmes rayons de détecteur (12, 13) présentent des distances perpendiculaires diverses par rapport au côté de la surface de matériau (17) à surveiller de la bande de papier ou de la bande de carton ondulé (7) pour déterminer la hauteur des défauts de matériau (20) détecté.

7. Installation selon la revendication 6, **caractérisée en ce que** le rideau de rayons de détecteur détecte un ou les deux des côtés de la surface de matériau (17, 18) de la bande de papier ou de la bande de carton ondulé (7).

8. Installation selon la revendication 6 ou 7, **caractérisée en ce que** le rideau de rayons de détecteur est formé et agencé de telle sorte qu'il s'étend également sur l'épaisseur de la bande de papier ou de la bande de carton ondulé (7) pour détecter les mêmes.

9. Installation selon l'une quelconque des revendications précédentes, **caractérisée en ce que** l'unité d'analyse de signal (3) convertit la durée détectée, qui s'étire entre la détection du défaut de matériau (20) par la première unité de détection (4) et la détection par la au moins deuxième unité de détection (5), en des trajets de différence pour le calcul de la position du défaut de matériau (20) pendant une accélération ou une décélération de la bande de papier ou de la bande de carton ondulé (7).

10. Installation selon l'une quelconque des revendications précédentes, **caractérisée en ce qu'**en présence d'un défaut de matériau (20) détecté s'effectue un ajustement correspondant des dispositifs de traitement ultérieurs pour éviter une collision avec le défaut de matériau (20) en relief.

11. Installation selon l'une quelconque des revendications précédentes, **caractérisée en ce que** le cas échéant s'effectue un ajustement du dispositif d'impression (38) et/ou de la bande de papier ou de la bande de carton ondulé (7) au moins dans la région du dispositif d'impression (38) pour éviter une collision entre le dispositif d'impression (38) et le défaut de matériau (20) en relief détecté.

12. Installation selon l'une quelconque des revendications précédentes, **caractérisée en ce que** s'effectue une protection du dispositif d'impression (38) par au moins un dispositif de protection face à un défaut de matériau (20) dangereux pour le dispositif d'impression (38).

13. Installation selon l'une quelconque des revendications précédentes, **caractérisée par** un second dispositif de stockage (43) pour l'approvisionnement d'une seconde bande de matériau (42) et un dispositif d'ondulation (44) pour faire onduler la seconde bande de matériau (42), dans laquelle un dispositif de liaison (35) relie ensemble la bande de matériau imprimée (7) et la seconde bande de matériau (42) ondulée.

14. Procédé destiné à détecter des défauts de matériau (20) sur une bande de papier ou une bande de carton ondulé (7) déplacée dans un sens de transport (6), comprenant les étapes de
- préparation d'un premier dispositif de stockage (21) pour l'approvisionnement de la bande de papier ou de la bande de carton ondulé (7) à traiter,
- préparation d'un dispositif d'impression (38) agencé en aval du premier dispositif de stockage (21) pour imprimer la bande de papier ou la bande de carton ondulé (7), et
- préparation d'un équipement pour détecter des défauts de matériau (20) sur la bande de papier ou la bande de carton ondulé (7) déplacée dans un sens de transport (6), comprenant
a) un dispositif de détection (2)
aa) avec une première unité de détection (4)
i) avec un premier émetteur (8) pour émettre des premiers rayons de détecteur (12), et
ii) avec un premier récepteur (9) affecté au premier émetteur (8) pour recevoir les premiers rayons de détecteur (12),
iii) dans lequel les premiers rayons de détecteur (12) courent parallèlement au côté de la surface de matériau (17) à surveiller de la bande de papier ou de la bande de carton ondulé (7) pour détecter les défauts de matériau (20) et parcourent un premier trajet de signal S1 entre le premier émetteur (8) et le premier récepteur (9), et
ab) avec au moins une deuxième unité de détection (5)
i) avec un deuxième émetteur (10) pour émettre des deuxièmes rayons de détecteur (13), et
ii) avec un deuxième récepteur (11) affecté au deuxième émetteur (10) pour recevoir les deuxièmes rayons de détecteur (13),
iii) dans lequel les deuxièmes rayons de détecteur (13) courent parallèlement au côté de la surface de matériau (17) à surveiller de la bande de papier ou de la bande de carton ondulé (7) pour détecter les défauts de matériau (20) et parcourent un deuxième trajet de signal S2 entre le deuxième émetteur (10) et le deuxième récepteur (11),
ac) dans lequel la première unité de détection (4) et la deuxième unité de détection (5) sont orientées de telle sorte que la distance mutuelle entre les premiers rayons de détecteur (12) et les deuxièmes rayons de détecteur (13) relativement au sens de transport (6) se modifie sur leur trajet de signal S1, S2, et
b) une unité d'analyse de signal (3) qui se situe en liaison de signalisation avec le premier récepteur (9) et le deuxième récepteur (11) pour analyser les défauts de matériau (20) détectés,
- dans lequel l'équipement pour détecter des défauts de matériau (20) sur la bande de papier ou la bande de carton ondulé (7) est agencé entre le premier dispositif de stockage (21) et le dispositif d'impression (38) pour détecter sur la bande de papier ou la bande de carton ondulé (7) des défauts de matériau (20) qui posent problème pour l'impression.

15. Procédé selon la revendication 14, **caractérisé en ce que** l'unité d'analyse de signal (3) délivre un message de défaut uniquement lorsque le défaut de matériau (20) se situe en dehors de limites de tolérance variablement définissables en matière de hauteur et/ou de position sur la largeur de bande et/ou la longueur.

16. Procédé selon la revendication 14 ou 15, **caractérisé en ce que** l'unité d'analyse de signal (3) délivre un message de défaut lorsque la première unité de détection (4) et/ou la deuxième unité de détection (5) détecte un défaut de matériau (20).

17. Procédé selon l'une quelconque des revendications 14 à 16, **caractérisé en ce que** s'effectue une protection du dispositif d'impression (38) face à un défaut de matériau (20) critique pour le dispositif d'impression (38) lorsqu'un défaut de matériau (20) correspondant est détecté.
